# FASCICULE DE BREVET EUROPEEN

(11) **EP 1 535 797 B1**
(45) Date de publication et mention de la délivrance du brevet: **11.04.2012**
(21) Numéro de dépôt: 04292752.5
(22) Date de dépôt: 22.11.2004
(51) Int. Cl.: B60Q 1/14

(54) **Projecteurs sur un véhicule automobile avec différents modes d'éclairage et détection d'anomalies**
Fahrzeugscheinwerfer mit verschiedenen Lichtverteilungen und Ausfallüberwachung
Vehicle headlamps with different lighting modes und failure monitoring

(30) Priorité: 25.11.2003 FR 0313834
(43) Date de publication de la demande: 01.06.2005
(73) Titulaire: VALEO VISION, 93012 Bobigny Cedex (FR)
(72) Inventeur: Moizard, Julien, 75012 Paris (FR)

(56) Documents cités:
- EP-A- 0 545 111
- EP-A- 0 976 974
- EP-A- 0 989 023
- DE-A- 19 722 717
- FR-A- 2 813 051
- FR-A- 2 813 829
- FR-A- 2 822 425
- FR-A- 2 833 547
- US-A1- 2002 057 573
- US-B1- 6 305 823
- PATENT ABSTRACTS OF JAPAN vol. 2002, no. 09, 4 septembre 2002 (2002-09-04) & JP 2002 144957 A (DENSO CORP), 22 mai 2002 (2002-05-22)

## Description

La présente invention concerne une installation de projecteurs de véhicule automobile.

Plus particulièrement, la présente invention concerne une installation de projecteurs pour un véhicule automobile comprenant au moins un projecteur de feux de croisement équipé d'un actionneur électrique commandant le pivotement du projecteur de feux de croisement autour d'un axe de manière à orienter le faisceau lumineux du projecteur de feux de croisement dans une direction prédéterminée, au moins un projecteur de feux de route, une unité électronique de contrôle et de commande comportant au moins un dispositif d'alimentation commandée pour chaque projecteur et pour chaque actionneur électrique, et un microcontrôleur qui met en oeuvre plusieurs modes de fonctionnement de l'installation de projecteurs, activés par des requêtes d'activation associées parmi lesquels :
- un premier mode de fonctionnement dit mode croisement pour lequel le projecteur de feux de croisement est allumé; le projecteur de feux de croisement étant orienté dans au moins une position angulaire dite basse pour produire un faisceau lumineux réglementaire de croisement;
- un deuxième mode de fonctionnement dit mode relevé pour lequel le faisceau lumineux du projecteur de feux de croisement est décalé vers le haut par rapport à la position angulaire basse du mode croisement dans au moins une position angulaire haute.

Un tel type d'installation est décrit et représenté dans les documents FR-2 786 448, FR-2 813 051 et FR-2 813 829, et DE 19729826.

En mode de fonctionnement en feux de route, le réflecteur du projecteur de feux de croisement est incliné de telle façon que son faisceau lumineux est agrandi pour augmenter l'éclairage du projecteur de feux de route.

Dans le document FR 2786448, l'installation de projecteurs comprend également un dispositif de surveillance pour contrôler l'inclinaison du réflecteur en mode de fonctionnement de feux de croisement. Si le réflecteur ne se trouve pas en inclinaison normale en mode croisement, le dispositif de surveillance coupe le projecteur de feux de croisement et allume le projecteur de feux antibrouillard.

Un inconvénient d'une telle installation de projecteurs est le coût et la complexité liés à la mise en place des capteurs de position du projecteur ainsi que les moyens de traitement du signal à mettre en oeuvre pour connaître la position du projecteur.

Un autre inconvénient est l'intégration difficile des capteurs de position dans un environnement thermique et mécanique contraignant.

Un autre inconvénient est que le dispositif de surveillance désactive, en cas de défaillance, le projecteur de feux de croisement ainsi que le projecteur de feux de route bien que l'installation de projecteurs soit toujours en mode de fonctionnement en feux de route. Il en résulte une baisse de la visibilité pour le conducteur.

Un autre inconvénient est que le dispositif de surveillance n'est actif qu'en mode croisement.

Afin de remédier à ces inconvénients, la présente invention propose une installation selon la revendication 1.

En effet, le blocage du projecteur de feux de croisement dans une position angulaire résulte fréquemment d'une défaillance de l'actionneur électrique d'où l'intérêt de surveiller et de détecter une anomalie dans le fonctionnement de l'actionneur électrique.

Selon d'autres caractéristiques du dispositif de l'invention :
- l'installation de projecteurs comprend également une unité de signalisation qui, en cas d'anomalie, avertit l'utilisateur du fonctionnement de l'installation dans une stratégie de gestion dégradée, par l'intermédiaire d'un avertissement sonore ou lumineux;
- l'actionneur électrique est un moteur électrique;

La présente invention propose aussi un procédé de commande d'une installation de projecteurs selon la revendication 4.

Selon l'invention :
- la stratégie de gestion dégradée, en mode croisement, interdit le passage en mode relevé du projecteur de feux de croisement;
- la stratégie de gestion dégradée, en mode relevé, provoque l'extinction du projecteur de feux de croisement après une requête d'activation du mode croisement ou d'un autre mode relevé
- la stratégie de gestion dégradée pour une installation de projecteurs comportant au moins un projecteur de feux antibrouillards, en mode relevé, provoque l'allumage du projecteur de feux antibrouillards après une requête d'activation du mode croisement ou d'un autre mode relevé;
- la stratégie de gestion dégradée avertit l'utilisateur du fonctionnement de l'installation de projecteurs dans une stratégie de gestion dégradée par l'intermédiaire d'un avertissement sonore ou lumineux.

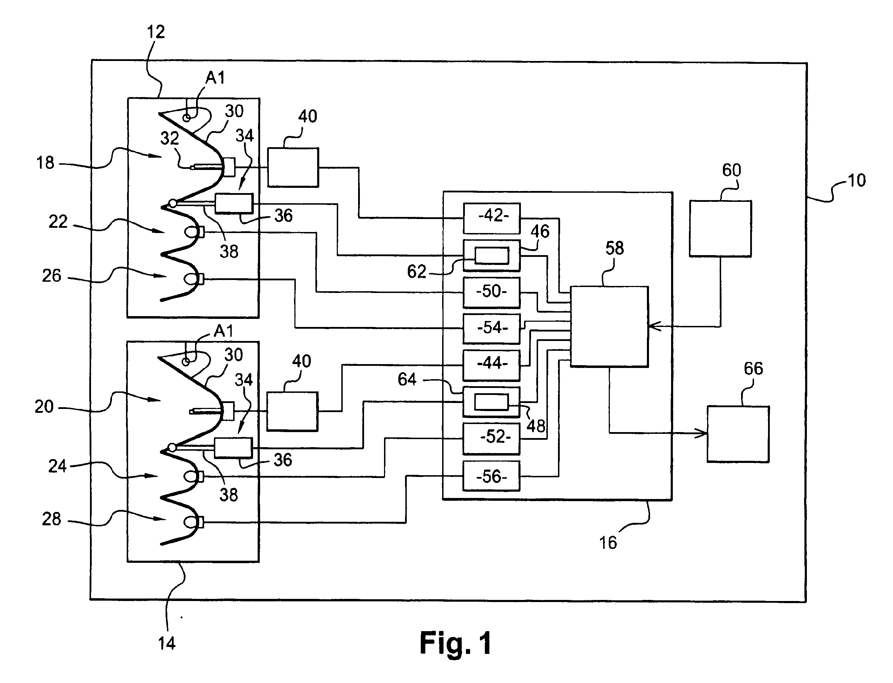

L'invention sera mieux comprise, et d'autres buts, caractéristiques, détails et avantages de celle-ci apparaîtront plus clairement dans la description explicative qui va suivre faite en référence au dessin annexé où la figure 1 représente schématiquement une installation de projecteurs conforme aux enseignements de l'invention.

Sur la figure 1, on a représenté une installation de projecteurs 10 pour véhicules automobiles comprenant un bloc projecteur droit 12, un bloc projecteur gauche 14, et une unité de contrôle et de commande 16.

Les blocs projecteurs 12,14 comprennent ici chacun un projecteur de feux de croisement 18,20, un projecteur de feux de route 22,24 et un projecteur de feux antibrouillards 26,28.

Chaque projecteur de croisement 18,20 comporte un réflecteur 30 et une source lumineuse 32.

Chaque projecteur de croisement 18,20 est monté en pivotement autour d'un axe horizontal A1, par rapport à un support fixe du bloc projecteurs 12,14.

Un actionneur électrique 34 est agencé dans chaque bloc projecteurs 12,14 de manière à commander le pivotement du projecteur de croisement associé 18,20 autour de son axe A1, afin d'orienter le projecteur de croisement 18,20 dans une position angulaire prédéterminée selon plusieurs modes de fonctionnement de l'installation 10. Les actionneurs 34 sont pilotés pour corriger l'orientation des projecteurs de croisement 18,20 en fonction de l'assiette du véhicule.

Chaque actionneur électrique 34 peut comporter, par exemple, un moteur électromécanique 36 qui commande le déplacement en translation axiale d'une tige d'actionnement 38 articulé sur le réflecteur 30 du projecteur de croisement 18,20 associé.

La source lumineuse 32 de chaque projecteur de croisement 18,20 est ici alimentée par l'intermédiaire d'un module d'allumage 40 ou ballast.

L'unité électronique de contrôle et de commande 16 comporte, pour chaque ballast 40, un dispositif d'alimentation commandée 42,44 ou "driver" ballast, qui permet de commander l'allumage des projecteurs de croisement 18,20 associés.

L'unité électronique de contrôle et de commande 16 comporte pour chaque actionneur électrique 34 un dispositif d'alimentation commandée 46,48 ou "driver" moteur, qui permet de commander l'alimentation des actionneurs électrique 34.

L'unité électronique de contrôle et de commande 16 comporte pour chaque projecteur de feux de route 22,24 un dispositif d'alimentation commandée 50,52 ou "driver" route, qui permet de commander l'allumage des projecteurs de route 22,24.

L'unité électronique de contrôle et de commande 16 comporte pour chaque projecteur de feux antibrouillard 26,28 un dispositif d'alimentation commandée 54,56 ou "driver antibrouillard, qui permet de commander l'allumage des projecteurs de feux antibrouillards 26,28.

L'unité de contrôle et de commande 16 comporte aussi un microcontrôleur 58 qui pilote les dispositifs d'alimentation commandée pour mettre en oeuvre plusieurs modes de fonctionnement de l'installation de projecteurs 10 parmi lesquels :
- un mode de fonctionnement en feux de croisement dit mode croisement;
- deux modes de fonctionnement en feux relevés dits modes relevés.

Les modes de fonctionnement de l'installation de projecteurs sont décrits plus loin dans la description.

Le microcontrôleur 58 traite les informations véhicules 60 et pilote les différents dispositifs d'alimentation commandée afin de mettre en oeuvre les modes de fonctionnement de l'installation de projecteurs 10. Les informations véhicule 60 sont notamment des requêtes d'activation des modes de fonctionnement. Les requêtes d'activation peuvent être produites par un interrupteur (non représenté) commandé par le conducteur du véhicule.

Conformément aux enseignements de l'invention, les dispositifs d'alimentation commandés 46,48 des actionneurs électriques 34 comportent chacun un moyen de détection des anomalies 62,64 dans le fonctionnement des actionneurs électriques 34. Les anomalies détectées peuvent se présenter notamment sous la forme d'une surchauffe, d'une surtension, d'une sous-tension, d'un court-circuit, d'un circuit ouvert, etc.

Avantageusement, l'unité de contrôle et de commande 16 comprend également une unité de signalisation 66 visant à avertir le conducteur du véhicule d'un dysfonctionnement de l'installation de projecteurs 10.

En cas de détection d'une anomalie dans le fonctionnement de l'un des actionneurs électriques 34, le moyen de détection 62,64 associé à l'actionneur électrique défaillant envoie un signal d'anomalie au microcontrôleur 58 pour l'informer d'une défaillance de l'un des actionneurs électriques 34.

En réponse au signal d'anomalie, le microcontrôleur 58 met en oeuvre une stratégie de gestion dégradée des modes de fonctionnement de l'installation de projecteurs 10 défaillant, lorsqu'une anomalie est détectée.

Lorsque aucune anomalie est détectée, le microcontrôleur 58 met en oeuvre une stratégie de gestion normale des modes de fonctionnement de l'installation de projecteurs 10.

Enfin, le microcontrôleur 58 pilote l'unité de signalisation 66 qui avertit l'utilisateur du fonctionnement de l'installation de projecteurs 10 dans une stratégie de gestion dégradée, par l'intermédiaire d'un avertissement sonore ou lumineux.

Bien entendu, selon des variantes de réalisation (non représentées) de l'invention, l'installation de projecteurs 10 peut comporter un dispositif d'alimentation commandée commun aux deux actionneurs électriques 34, ou une unité de contrôle et de commande 16 pour chaque bloc projecteur 12,14.

Les moyens de détection des anomalies 62,64 peuvent être réalisés de différentes manières.

Dans un autre mode de réalisation, les moyens de détection des anomalies 62,64 peuvent être constitués de capteurs de mesure des grandeurs caractéristiques du courant d'alimentation des actionneurs électriques 34 comme la tension, l'intensité et la température.

Nous allons maintenant décrire les différents modes de fonctionnement de l'installation de projecteurs 10.

Par défaut, l'installation de projecteurs 10 est prévue pour fonctionner dans une stratégie de gestion normale des modes de fonctionnement parmi lesquels :
- un mode de fonctionnement dit mode croisement pour lequel les projecteurs de feux de croisement 18,20 sont allumés; Les projecteurs de feux de croisement 18,20 étant orientés dans au moins une position angulaire dite basse pour produire des faisceaux lumineux réglementaires de croisement;
- des modes de fonctionnement dit modes relevés pour lequel les faisceaux lumineux des projecteurs de feux de croisement 18,20 sont décalés vers le haut par rapport à la position angulaire basse du mode croisement dans au moins une position angulaire haute.

Parmi les modes relevés, on distingue :
- un mode de fonctionnement en feux de route dit mode route pour lequel les projecteurs de feux de croisement 18,20 et les projecteurs de feux de route 22,24 sont allumés; les projecteurs de feux de croisement 18,20 sont orientés dans une première position angulaire haute ou relevée, de sorte que les projecteurs de feux de croisement 18,20 produisent des faisceaux additionnels d'éclairage complémentaire des faisceaux produits par les projecteurs de feux de route 22,24 pour réaliser des faisceaux réglementaires de feux de route;
- un mode de fonctionnement de feux d'autoroute dit mode autoroute pour lequel les projecteurs de feux de croisement 18,20 sont allumés; les projecteurs de feux de croisement 18,20 sont orientés dans une seconde position angulaire haute ou relevée, de sorte que les projecteurs de feux de croisement 18,20 produisent des faisceaux réglementaires de feux d'autoroute;

On décrit maintenant le procédé de gestion des modes de fonctionnement de l'installation de projecteurs 10 mis en oeuvre par le microcontrôleur 58.

Le procédé a pour fonction de détecter une anomalie dans le fonctionnement des actionneurs électriques 34 et d'activer une stratégie de gestion des modes de fonctionnement adaptée à la situation dans laquelle se trouve l'installation de projecteurs 10 pour éviter que les projecteurs de feux de croisement 18,20 produisent un faisceau éblouissant.

En effet, une défaillance de l'actionneur électrique 34 engendre fréquemment un blocage du projecteur de feux de croisement (18,20) et par conséquent la production d'un faisceau lumineux éblouissant par ledit projecteur lorsque le blocage intervient en position relevée. Le procédé a pour objet de détecter une anomalie dans le fonctionnement des actionneurs électrique 34, ce qui permet de remédier de manière simple et économique à un éblouissement du à un blocage du projecteur de feux de croisement 18,20.

Initialement, l'installation de projecteurs 10 est activée dans une stratégie de gestion par défaut et plus particulièrement dans une stratégie de gestion normale des modes de fonctionnement, en l'absence d'anomalie.

Si une anomalie a été détectée, le microcontrôleur 58 met en oeuvre une stratégie de gestion dégradée.

Ainsi le procédé comprend une première étape de détection des anomalies dans le fonctionnement des actionneurs électriques 34 équipant les réflecteurs 30 des projecteurs de feux de croisement 18,20. Le moyen de détection des anomalies 62,64 surveille le fonctionnement de l'actionneur électrique 34. En cas de détection d'une anomalie pour l'un des actionneurs électriques 34, le moyen de détection 62,64 envoie un signal d'anomalie au microcontrôleur 58 pour l'informer d'une défaillance de l'actionneur électrique 34 et par conséquent d'un problème de pivotement du projecteur de feux de croisement 18,20 associé à l'actionneur électrique 34 défaillant.

Ensuite, le procédé comprend une deuxième étape de mise en oeuvre d'une stratégie de gestion dégradée des modes de fonctionnement du bloc projecteur 12,14 défaillant si une anomalie a été détectée. En réponse au signal d'anomalie, le microcontrôleur 58 pilote les différents dispositifs d'alimentation commandés afin de mettre en oeuvre une stratégie de gestion dégradée des modes de fonctionnement.

Enfin, si aucune anomalie n'a été détectée, le procédé comprend une troisième étape de mise en oeuvre d'une stratégie de gestion normale des modes de fonctionnement de l'installation de projecteurs 10. Le microcontrôleur 58 conserve la stratégie de gestion par défaut, c'est à dire la stratégie de gestion normale des modes de fonctionnement. Les moyens de détection des anomalies 62,64 continuent de surveiller le fonctionnement des actionneurs électriques 34.

Bien entendu, le microcontrôleur 58 conserve en mémoire qu'une défaillance de l'un des actionneurs électriques 34 a été détectée. Ainsi, lors d'une prochaine utilisation, si l'anomalie n'est pas corrigée, l'installation de projecteurs 10 fonctionnera dans une stratégie de gestion dégradée.

On décrit maintenant la stratégie de gestion dégradée des modes de fonctionnement de l'installation de projecteurs 10. La stratégie de gestion dégradée a pour objet d'éviter un faisceau lumineux éblouissant et d'éviter une extinction simultanée des deux projecteurs de feux de croisement 18,20 en cas de défaillance des actionneurs électriques 34.

La stratégie de gestion dégradée des modes de fonctionnement de l'installation de projecteurs 10 est mise en oeuvre par microcontrôleur 58 lorsqu'il reçoit un signal d'anomalie produit par l'un des moyens de détection des anomalies 62,64.

Le microcontrôleur 58 met en oeuvre une stratégie de gestion dégradée qui est adaptée au mode de fonctionnement de l'installation de projecteurs 10 et à la requête d'activation initiée par l'utilisateur qui commande un interrupteur pour activer le mode de fonctionnement souhaité.

Ainsi, en mode route et après une requête d'activation du mode croisement ou du mode autoroute, le microcontrôleur 58, dans une première étape, pilote le dispositif d'alimentation commandé 42,44 du projecteur de feux de croisement 18,20 afin d'éteindre ledit projecteur.

Puis dans une deuxième étape, le microcontrôleur 58 pilote le dispositif d'alimentation commandé 54,56 du projecteur de feux antibrouillards 26,28 afin d'allumer ledit projecteur.

Enfin, dans une troisième étape, le microcontrôleur 58 pilote l'unité de signalisation 66 qui avertit l'utilisateur du fonctionnement de l'installation de projecteurs 10 dans une stratégie de gestion dégradée, par l'intermédiaire d'un avertissement sonore ou lumineux.

L'avantage d'une telle stratégie pour le mode route est d'éviter un faisceau lumineux éblouissant en mode croisement ou en mode autoroute, mais également de fournir un faisceau lumineux de substitution grâce au projecteur antibrouillard 26,28 ce qui garantit une visibilité correcte malgré une défaillance de l'un des actionneurs électriques 34.

En mode autoroute et après une requête d'activation du mode croisement, le microcontrôleur 58, dans une première étape, éteint le projecteur de feux de croisement 18,20 de l'installation de projecteurs 10 puis allume, dans une deuxième étape, le projecteur de feux antibrouillards 26,28. Enfin, dans une troisième étape, le microcontrôleur 58 pilote l'unité de signalisation 66 qui avertit l'utilisateur du fonctionnement de l'installation de projecteurs 10 dans une stratégie de gestion dégradée, par l'intermédiaire d'un avertissement sonore ou lumineux.

L'avantage d'une telle stratégie est d'éviter que les projecteurs de feux de croisement produisent des faisceaux éblouissants en mode croisement mais également de fournir un faisceau lumineux de substitution grâce au projecteur antibrouillard 26,28 ce qui garantit une visibilité correcte malgré une défaillance de l'un des actionneurs électriques 34.

En mode autoroute et après une requête d'activation du mode route, le microcontrôleur 58 interdit le passage du projecteur de feux de croisement 18,20 de l'installation de projecteurs 10, dans une première position angulaire relevée, c'est à dire la position angulaire correspondant au mode route;

Enfin, dans une deuxième étape, le microcontrôleur 58 pilote l'unité de signalisation 66 qui avertit l'utilisateur du fonctionnement de l'installation de projecteurs 10 dans une stratégie de gestion dégradée, par l'intermédiaire d'un avertissement sonore ou lumineux.

L'avantage d'une telle stratégie est le même que celui expliqué plus loin dans la description.

En mode croisement et après une requête d'activation du mode route ou du mode autoroute, le microcontrôleur 58, dans une première étape, interdit le passage du projecteur de feux de croisement 18,20 dans une position angulaire relevée, c'est à dire une position angulaire correspondant au mode autoroute ou au mode route. Puis, dans une deuxième étape, le microcontrôleur 58 pilote l'unité de signalisation 66 qui avertit l'utilisateur du fonctionnement de l'installation de projecteurs 10 dans une stratégie de gestion dégradée, par l'intermédiaire d'un avertissement sonore ou lumineux.

Un avantage d'une telle stratégie pour le mode croisement est qu'elle permet d'éviter l'extinction simultanée des projecteurs de feux de croisement 18,20.

De plus, en interdisant le passage à une position angulaire relevée, le microcontrôleur 58 autorise l'utilisation et donc l'allumage des projecteurs de feux de croisement 18,20 aussi bien pour le mode route que pour le mode autoroute.

En effet, si le microcontrôleur 58 n'interdisait pas le passage à une position angulaire relevée, les projecteurs de feux de croisement 18,20 seraient donc en position angulaire relevée pour le mode route ou le mode autoroute.

Mais si une nouvelle défaillance des actionneurs électriques 34 est détectée en mode route ou en mode autoroute et que le mode croisement est à nouveau activé, la stratégie consisterait pour éviter des faisceaux éblouissants en mode croisement à éteindre les projecteurs de feux de croisement 18,20 et à allumer les projecteurs de feux antibrouillards 26,28.

La double extinction des projecteurs de feux de croisement 18,20 serait alors très dangereuse car seules les projecteurs de feux antibrouillards 26,28 seraient allumés, d'où une faible visibilité pour le conducteur.

Par conséquent en interdisant le passage à une position angulaire relevée, on évite une double extinction les projecteurs de feux de croisement 18,20 qui seront toujours utilisables en mode route ou mode autoroute malgré qu'ils ne soient pas orientés dans une position angulaire relevée, ce qui permet tout de même de conserver une bonne visibilité.

L'invention a été décrite ici dans le cadre d'une installation de projecteurs 10 dans laquelle plusieurs projecteurs sont agencés dans un même bloc projecteur 12,14. Bien entendu, l'invention s'applique aussi à une installation 10 comportant des projecteurs agencés dans des blocs distincts et placés différemment sur la face avant du véhicule automobile.

## Revendications

1. Installation de projecteurs (10) pour un véhicule automobile comprenant au moins un projecteur de feux de croisement (18,20) équipé d'un actionneur électrique (34) commandant le pivotement du projecteur de feux de croisement (18,20) autour d'un axe horizontal (A1) de manière à orienter le faisceau lumineux du projecteur de feux de croisement (18,20) dans une direction prédéterminée, au moins un projecteur de feux de route (22,24), une unité électronique de contrôle et de commande (16) comportant au moins un dispositif d'alimentation commandée pour chaque projecteur (18,20,22,24) et pour chaque actionneur électrique (34), et un microcontrôleur (58) qui met en oeuvre plusieurs modes de fonctionnement de l'installation de projecteurs (10), activés par des requêtes d'activation associées, parmi lesquels :
un premier mode de fonctionnement dit mode croisement pour lequel le projecteur de feux de croisement (18,20) est allumé; le projecteur de feux de croisement (18,20) étant orienté dans au moins une position angulaire dite basse pour produire un faisceau lumineux réglementaire de croisement;
un deuxième mode de fonctionnement dit mode relevé pour lequel le faisceau lumineux du projecteur de feux de croisement (18,20) est décalé vers le haut par rapport à la position angulaire basse du mode croisement dans au moins une position angulaire haute;
**caractérisé en ce que** le dispositif d'alimentation commandé (46,48) de l'actionneur électrique (34) comporte un moyen de détection d'anomalies (62,64) dans le fonctionnement de l'actionneur électrique (34) qui produit un signal d'anomalie en cas de détection d'une anomalie, et **en ce que**, en cas de détection d'une anomalie, le microcontrôleur (58) commande l'installation de projecteurs (10) dans une stratégie de gestion dégradée des modes de fonctionnement visant à empêcher que le projecteur de feux de croisement (18,20) produise un faisceau éblouissant,
**en ce que,** en mode relevé, le projecteur de feux de croisement (18,20) est orienté :
- dans une première position angulaire haute, de sorte que le projecteur de feux de croisement (18,20) produise un faisceau additionnel d'éclairage complémentaire du faisceau produit par le projecteur de feux de route (22,24) pour réaliser un faisceau réglementaire de feux de route, ou
- dans une seconde position angulaire haute, de sorte que le projecteur de feux de croisement (18,20) produise un faisceau d'éclairage réglementaire de feux d'autoroute,
**en ce que,** en cas de détection d'une anomalie, le microcontrôleur (58) commande l'installation de projecteurs (10) dans une stratégie de gestion dégradée des modes de fonctionnement visant à provoquer l'extinction du projecteur de feux de croisement (18,20) après une requête d'activation du mode croisement ou d'un autre mode relevé, et, pour la commande d'une installation de projecteurs (10) comportant au moins un projecteur de feux antibrouillards (26,28), provoquer l'allumage du projecteur de feux antibrouillards (26,28) après une requête d'activation du mode croisement ou d'un autre mode relevé,
**et en ce que** la stratégie de gestion dégradée, en mode croisement, interdit le passage en mode relevé du projecteur de feux de croisement (18,20).

2. Installation de projecteurs (10) selon la revendication 1, **caractérisé en ce qu'**elle comporte une unité de signalisation (66) qui, en cas d'anomalie, avertit l'utilisateur du fonctionnement de l'installation de projecteurs (10) dans une stratégie de gestion dégradée, par l'intermédiaire d'un avertissement sonore ou lumineux.

3. Installation de projecteurs (10) selon l'une quelconque des revendications précédentes, **caractérisé en ce que** l'actionneur électrique (34) est un moteur électrique (36).

4. Procédé de commande d'une installation de projecteurs (10) pour un véhicule automobile comprenant au moins un projecteur de feux de croisement (18,20) équipé d'un actionneur électrique (34) commandant le pivotement du projecteur de feux de croisement (18,20) autour d'un axe horizontal (A1) de manière à orienter le faisceau lumineux du projecteur de feux de croisement (18,20) dans une direction prédéterminée, au moins un projecteur de feux de route (22,24), une unité électronique de contrôle et de commande (16) comportant au moins un dispositif d'alimentation commandée pour chaque projecteur (18,20,22,24) et pour chaque actionneur électrique (34), et un microcontrôleur (58) qui met en oeuvre plusieurs modes de fonctionnement de l'installation de projecteurs (10), activés par des requêtes d'activation associées, parmi lesquels :
un premier mode de fonctionnement dit mode croisement pour lequel le projecteur de feux de croisement (18,20) est allumé; le projecteur de feux de croisement (18,20) étant orienté dans au moins une position angulaire dite basse pour produire un faisceau lumineux réglementaire de croisement;
un deuxième mode de fonctionnement dit mode relevé pour lequel le faisceau lumineux du projecteur de feux de croisement (18,20) est décalé vers le haut par rapport à la position angulaire basse du mode croisement dans au moins une position angulaire haute;
**caractérisé en ce qu'**il comporte :
une étape de détection d'une anomalie dans le fonctionnement de l'actionneur électrique (34) et de production d'un signal d'anomalie si une anomalie est détectée;
une étape d'activation soit d'une stratégie de gestion dégradée des modes de fonctionnement de l'installation de projecteurs (10) en cas d'anomalie, soit d'une stratégie de gestion normale des modes de fonctionnement de l'installation de projecteurs (10) en l'absence d'anomalie,
**en ce que,** en mode relevé, le projecteur de feux de croisement (18,20) est orienté :
- dans une première position angulaire haute, de sorte que le projecteur de feux de croisement (18,20) produise un faisceau additionnel d'éclairage complémentaire du faisceau produit par le projecteur de feux de route (22,24) pour réaliser un faisceau réglementaire de feux de route, ou
- dans une seconde position angulaire haute, de sorte que le projecteur de feux de croisement (18,20) produise un faisceau d'éclairage réglementaire de feux d'autoroute
et **en ce que** la stratégie de gestion dégradée, en mode relevé, provoque l'extinction du projecteur de feux de croisement (18,20) après une requête d'activation du mode croisement ou d'un autre mode relevé, et, pour la commande d'une installation de projecteurs (10) comportant au moins un projecteur de feux antibrouillards (26,28), provoque l'allumage du projecteur de feux antibrouillards (26,28) après une requête d'activation du mode croisement ou d'un autre mode relevé,
**et en ce que** la stratégie de gestion dégradée, en mode croisement, interdit le passage en mode relevé du projecteur de feux de croisement (18,20).

5. Procédé selon la revendication 4, **caractérisé en ce que** la stratégie de gestion dégradée avertit l'utilisateur du fonctionnement de l'installation de projecteurs (10) dans une stratégie de gestion dégradée par l'intermédiaire d'un avertissement sonore ou lumineux.

## Claims

1. Headlight installation (10) for a motor vehicle comprising at least one low-beam headlight (18, 20) which is equipped with an electric actuator (34) which controls the pivoting of the low-beam headlight (18, 20) around a horizontal axis (A1) such as to orient the light beam of the low-beam headlight (18, 20) in a predetermined direction, at least one high-beam headlight (22, 24), an electronic control and command unit (16) comprising at least one supply device which is controlled for each headlight (18, 20, 22, 24) and for each electric actuator (34), and a microcontroller (58) which implements a plurality of operating modes of the headlight installation (10) which are activated by associated activation requests, including:
- a first operating mode, known as the low-beam mode, for which the low-beam headlight (18, 20) is lit; the low-beam headlight (18, 20) being oriented in at least one angular position, known as the low position, in order to produce a statutory low light beam;
- a second operating mode, known as the high-beam mode, for which the light beam of the low-beam headlight (18, 20) is offset upwards relative to the low angular position of the low-beam mode, in at least one high angular position;
**characterised in that** the controlled supply device (46, 48) of the electric actuator (34) comprises a means (62, 64) for detection of abnormalities in the operation of the electric actuator (34), which produces an abnormality signal in the event of detection of an abnormality, and **in that**, in the event of detection of an abnormality, the microcontroller (58) controls the headlight installation (10) in a strategy of downgraded control of the operating modes, with the aim of preventing the low-beam headlight (18, 20) from producing a dazzling beam,
**in that**, in the high mode, the low-beam headlight (18, 20) is oriented:
- in a first high angular position, such that the low-beam headlight (18, 20) produces an additional lighting beam which is complementary to the beam produced by the high-beam headlight (22, 24) in order to produce a statutory high beam, or
- in a second high angular position, such that the low-beam headlight (18, 20) produces a statutory motorway headlight lighting beam,
**in that**, in the event of detection of an abnormality, the microcontroller (58) controls the headlight installation (10) in a downgraded control strategy of the operating modes, with the aim of giving rise to switching off of the low-beam headlight (18, 20) after a request for activation of the low-beam mode or another, raised mode, and, for the control of a headlight installation (10) comprising at least one anti-fog headlight (26, 28), with the aim of giving rise to switching on of the anti-fog headlight (26, 28) after a request for activation of the low-beam mode or another, raised mode,
and **in that** the downgraded control strategy, in the low-beam mode, prevents the transition to the raised mode of the low-beam headlight (18, 20).

2. Headlight installation (10) according to claim 1, **characterised in that** it comprises a signalling unit (66) which, in the event of an abnormality, warns the user of the operation of the headlight installation (10) in a downgraded control strategy, by means of an audible or light-up warning.

3. Headlight installation (10) according to either of the preceding claims, **characterised in that** the electric actuator (34) is an electric motor (36).

4. Method for control of a headlight installation (10) for a motor vehicle, comprising at least one low-beam headlight (18, 20) which is equipped with an electric actuator (34) which controls the pivoting of the low-beam headlight (18, 20) around a horizontal axis (A1) such as to orient the light beam of the low-beam headlight (18, 20) in a predetermined direction, at least one high-beam headlight (22, 24), an electronic control and command unit (16) comprising at least one supply device which is controlled for each headlight (18, 20, 22, 24) and for each electric actuator (34), and a microcontroller (58) which implements a plurality of operating modes of the headlight installation (10) which are activated by associated activation requests, including:
- a first operating mode, known as the low-beam mode, for which the low-beam headlight (18, 20) is lit; the low-beam headlight (18, 20) being oriented in at least one angular position, known as the low position, in order to produce a statutory low light beam;
- a second operating mode, known as the high-beam mode, for which the light beam of the low-beam headlight (18, 20) is offset upwards relative to the low angular position of the low-beam mode, in at least one high angular position;
**characterised in that** it comprises:
a step of detection of an abnormality in the operation of the electric actuator (34) and production of an abnormality signal if an abnormality is detected;
a step of activation either of a strategy of downgraded control of the operating modes of the headlight installation (10) in the event of an abnormality, or of a strategy of normal control of the operating modes of the headlight installation (10) in the absence of an abnormality,
**in that**, in the high mode, the low-beam headlight (18, 20) is oriented:
- in a first high angular position, such that the low-beam headlight (18, 20) produces an additional lighting beam which is complementary to the beam produced by the high-beam headlight (22, 24) in order to produce a statutory high beam, or
- in a second high angular position, such that the low-beam headlight (18, 20) produces a statutory motorway headlight lighting beam,
**in that** the downgraded control strategy, in the raised mode, gives to switching off of the low-beam headlight (18, 20) after a request for activation of the low-beam mode or another, raised mode, and, for the control of a headlight installation (10) comprising at least one anti-fog headlight (26, 28), gives rise to switching on of the anti-fog headlight (26, 28) after a request for activation of the low-beam mode or another, raised mode,
and **in that** the downgraded control strategy, in the low-beam mode, prevents the transition to the raised mode of the low-beam headlight (18, 20).

5. Method according to claim 4, **characterised in that** the downgraded control strategy warns the user of the operation of the headlight installation (10) in a downgraded control strategy, by means of an audible or light-up warning.

## Patentansprüche

1. Scheinwerferanlage (10) für ein Kraftfahrzeug, mit wenigstens einem Abblendlichtscheinwerfer (18, 20), der mit einem elektrischen Stellorgan (34) versehen ist, welches das Schwenken des Abblendlichtscheinwerfers (18, 20) um eine horizontale Achse (A1) solchermaßen steuert, dass das Lichtbündel des Abblendlichtscheinwerfers (18, 20) in einer vorbestimmten Richtung ausgerichtet wird, wenigstens einem Fernlichtscheinwerfer (22, 24), einer elektronischen Steuer- und Stelleinheit (16), die wenigstens eine gesteuerte Stromversorgungseinrichtung für jeden Scheinwerfer (18, 20, 22, 24) und für jedes elektrische Stellorgan (34) umfasst, und einem Mikrocontroller (58), der mehrere Betriebsarten der Scheinwerferanlage (10) ausführt, die durch zugeordnete Aktivierungsanfragen aktiviert werden, darunter:
- eine erste Betriebsart, bezeichnet als Abblendlichtmodus, für den der Abblendlichtscheinwerfer (18, 20) eingeschaltet ist, wobei der Abblendlichtscheinwerfer (18, 20) dabei in wenigstens einer sogenannten unteren Winkelstellung ausgerichtet ist, um ein vorschriftsgemäßes Abblendlicht zu erzeugen;
- eine zweite Betriebsart, bezeichnet als angehobener Lichtmodus, für den das Lichtbündel des Abblendlichtscheinwerfers (18, 20) bezüglich der unteren Winkelstellung des Abblendlichtmodus nach oben in wenigstens eine obere Winkelstellung versetzt ist;
**dadurch gekennzeichnet, dass** die gesteuerte Stromversorgungseinrichtung (46, 48) des elektrischen Stellorgans (34) ein Mittel (62, 64) zur Detektion von Fehlern beim Betrieb des elektrischen Stellorgans (34) umfasst, das bei Feststellung eines Fehlers ein Fehlersignal erzeugt, und dass bei Feststellung eines Fehlers der Mikrocontroller (58) die Scheinwerferanlage (10) in einer Notbetriebssteuerung steuert, wodurch verhindert werden soll, dass der Abblendlichtscheinwerfer (18, 20) ein blendendes Lichtbündel erzeugt,
dass im angehobenen Lichtmodus der Abblendlichtscheinwerfer (18, 20) ausgerichtet ist:
- in eine erste obere Winkelstellung, so dass der Abblendlichtscheinwerfer (18, 20) ein zusätzliches Lichtbündel zur ergänzenden Beleuchtung des durch den Fernlichtscheinwerfer (22, 24) erzeugten Lichtbündels erzeugt, um ein vorschriftsgemäßes Fernlicht auszuführen, oder
- in eine zweite obere Winkelstellung, so dass der Abblendlichtscheinwerfer (18, 20) ein vorschriftsgemäßes Autobahnlicht erzeugt,
dass bei Feststellung eines Fehlers der Mikrocontroller (58) die Scheinwerferanlage (10) in einer Notbetriebsteuerung steuert, wodurch das Ausschalten des Abblendlichtscheinwerfers (18, 20) nach einer Aktivierungsanfrage des Abblendlichtmodus oder eines anderen angehobenen Lichtmodus bewirkt werden soll und zur Steuerung einer wenigstens einen Nebelscheinwerfer (26, 28) umfassenden Scheinwerferanlage (10) das Einschalten des Nebelscheinwerfers (26, 28) nach einer Aktivierungsanfrage des Abblendlichtmodus oder eines anderen angehobenen Lichtmodus bewirkt werden soll,
und dass die Notbetriebssteuerung im Abblendlichtmodus den Wechsel des Abblendlichtscheinwerfers (18, 20) in den angehobenen Lichtmodus untersagt.

2. Scheinwerferanlage (10) nach Anspruch 1,
**dadurch gekennzeichnet, dass** sie eine Signalgebungseinheit (66) umfasst, die im Falle eines Fehlers den Benutzer mittels eines Warntons oder Warnlichts über den Betrieb der Scheinwerferanlage (10) in einer Notbetriebssteuerung in Kenntnis setzt.

3. Scheinwerferanlage (10) nach einem der vorhergehenden Ansprüche,
**dadurch gekennzeichnet, dass** das elektrische Stellorgan (34) ein Elektromotor (36) ist.

4. Verfahren zum Steuern einer Scheinwerferanlage (10) für ein Kraftfahrzeug mit wenigstens einem Abblendlichtscheinwerfer (18, 20), der mit einem elektrischen Stellorgan (34) versehen ist, welches das Schwenken des Abblendlichtscheinwerfers (18, 20) um eine horizontale Achse (A1) solchermaßen steuert, dass das Lichtbündel des Abblendlichtscheinwerfers (18, 20) in einer vorbestimmten Richtung ausgerichtet wird, wenigstens einem Fernlichtscheinwerfer (22, 24), einer elektronischen Steuer- und Stelleinheit (16), die wenigstens eine gesteuerte Stromversorgungseinrichtung für jeden Scheinwerfer (18, 20, 22, 24) und für jedes elektrische Stellorgan (34) umfasst, und einem Mikrocontroller (58), der mehrere Betriebsarten der Scheinwerferanlage (10) ausführt, die durch zugeordnete Aktivierungsanfragen aktiviert werden, darunter:
- eine erste Betriebsart, bezeichnet als Abblendlichtmodus, für den der Abblendlichtscheinwerfer (18, 20) eingeschaltet ist, wobei der Abblendlichtscheinwerfer (18, 20) dabei in wenigstens einer so genannten unteren Winkelstellung ausgerichtet ist, um ein vorschriftsgemäßes Abblendlicht zu erzeugen;
- eine zweite Betriebsart, bezeichnet als angehobener Lichtmodus, für den das Lichtbündel des Abblendlichtscheinwerfers (18, 20) bezüglich der unteren Winkelstellung des Abblendlichtmodus nach oben in wenigstens eine obere Winkelstellung versetzt ist;
**dadurch gekennzeichnet, dass** es umfasst:
- einen Schritt zur Detektion eines Fehlers beim Betrieb des elektrischen Stellorgans (34) und zur Erzeugung eines Fehlersignals, wenn ein Fehler festgestellt wird;
- einen Schritt zur Aktivierung entweder einer Notbetriebssteuerung der Scheinwerferanlage (10) im Falle eines Fehlers oder einer normalen Betriebsartensteuerung der Scheinwerferanlage (10) ohne Fehler,
und dass im angehobenen Lichtmodus der Abblendlichtscheinwerfer (18, 20) ausgerichtet ist:
- in eine erste obere Winkelstellung, so dass der Abblendlichtscheinwerfer (18, 20) ein zusätzliches Lichtbündel zur ergänzenden Beleuchtung des durch den Fernlichtscheinwerfer (22, 24) erzeugten Lichtbündels erzeugt, um ein vorschriftsgemäßes Fernlicht auszuführen, oder
- in eine zweite obere Winkelstellung, so dass der Abblendlichtscheinwerfer (18, 20) ein vorschriftsgemäßes Autobahnlicht erzeugt,
und dass die Notbetriebssteuerung im angehobenen Lichtmodus das Ausschalten des Abblendlichtscheinwerfers (18, 20) nach einer Aktivierungsanfrage des Abblendlichtmodus oder eines anderen angehobenen Lichtmodus bewirken soll und, zur Steuerung einer wenigstens einen Nebelscheinwerfer (26, 28) umfassenden Scheinwerferanlage (10), das Einschalten des Nebelscheinwerfers (26, 28) nach einer Aktivierungsanfrage des Abblendlichtmodus oder eines anderen angehobenen Lichtmodus bewirken soll,
und dass die Notbetriebssteuerung im Abblendlichtmodus den Wechsel des Abblendlichtscheinwerfers (18, 20) in den angehobenen Lichtmodus untersagt

5. Verfahren nach Anspruch 4,
**dadurch gekennzeichnet, dass** die Notbetriebsteuerung den Benutzer mittels eines Warntons oder Warnlichts über den Betrieb der Scheinwerferanlage (10) in einer Notbetriebssteuerung in Kenntnis setzt.
